# EUROPEAN PATENT APPLICATION

(11) **EP 1 795 552 A1**
(43) Date of publication of application: **13.06.2007**
(21) Application number: 05026637.8
(22) Date of filing: 06.12.2005
(51) Int. Cl.: C08J 9/00

(54) **A thermoplastic elastomer foaming material and its processing**

(71) Applicant: TSRC Corporation, Ta-She, Kaohsiung - Taiwan 815 (CN)
(72) Inventor: Su, Jau-Rong, Koahsiung Taiwan 815 (CN); Tu, Yuan-Chao, Koahsiung Taiwan 815 (CN); Kung, Chien-Kun, Koahsiung Taiwan 815 (CN); Lee, Cheng-Te, Koahsiung Taiwan 815 (CN)
(74) Representative: Patentanwälte Lambsdorff & Lange

(57) **Abstract**

A thermoplastic elastomer foaming product, comprising:(A) a hydrogenated styrenic / conjugated diene copolymer, (B) a polyolefin,(C) a plasticizer, and optional additives such as blowing agents, cross-linking agents, promoters, fillers, stabilizers and the like. The thermoplastic elastomer foaming product is soft in nature and has a low specific gravity. The present invention also provides a method of forming the above thermoplastic elastomer foaming product.

## Description

### TECHNICAL FIELD

The present invention relates to a thermoplastic elastomer foaming material, and more particularly to a hydrogenated styrenic/conjugated diene series copolymer based foaming material which is relatively soft and has a low specific gravity and the manufacturing method thereof.

### BACK GROUND OF THE INVENTION

Foaming materials are widely used in the daily life; weatherproof seals of cars, heat insulation layers, vibration proof substances on appliances, and soles of shoes are all made of such materials. The materials include ethylene vinyl acetate (EVA), styrene-butadiene rubber (SBR), natural rubber (NR), acrylonitrile-butadiene rubber (NBR), ethylene-propylene-nonconjugated diene rubber (EPDM), butadiene rubber (BR), polyethylene (PE), polystyrene (PS), poly vinyl chloride (PVC), polyurethane (PU), polypropylene (PP), chloroprene rubber (CR), isoprene rubber (IR) and styrene-butadienestyrene elastomer (SBS) which is also the well-known primary material of soles of shoes. Foaming materials contain a large amount of bubbles, in other words, foaming rubbers or plastics can be seen as composite materials filled with gases. And like other synthetic materials, characteristics of foaming rubbers or plastics can be altered to meet different needs by modifying compositions or processing procedures thereof.

Typically, additives are added into a polymer matrix which is the main part of foaming materials and dominates basic characteristics of such materials. The primary purposes of additives are to improve processing properties of the polymer and to reduce the cost. To meet various needs, the composition of the additives and the polymer matrix can be altered.

In the traditional thermosetting rubber, NR, SBR and CR are well-known close-cell foaming materials. However, they cause air pollution during the manufacturing process by producing Soₓ during the vulcanization process. NR, SBR and CR are not only hazardous to environment but also impossible to recycle because they are all thermosetting rubbers. These disadvantages limit applications of such materials.

On the other hand, "ethylene-propylene copolymer" and "ethylene-α-olefin copolymer" are used in the close-cell foaming material. Nevertheless, they are not soft in touch and deform easily under compression. Usually the properties can be improved by adding "polyolefinic rubbers" at specific ratios into these copolymers. But in some circumstances, compatibilities between the copolymers and the rubbers are poor. These copolymers also are not easily processed with processing oils, and thus they are not suitable for making a soft foaming material with low specific gravity.

A flexible thermoplastic article comprising from about 2 to about 15 percent by weight styrene-elastomer block copolymer, from about 60 to about 90 percent by weight polyolefin, from about 4 to about 15 percent by weight plasticizer oil and from about 0.05 to about 3 percent by weight additive was proposed in U.S. Patent No. 6,653,360. And the styrenic-elastomer block copolymer further comprises SEBS. The flexibility of the article was improved by adding SEBS having excellent compatibility with the plasticizer oil. Nonetheless, the contents of the plasticizer oil and the SEBS are low, so the hardness and specific gravity of the flexible thermoplastic article are still high. And it is not suitable for mass production since two processing steps are needed for manufacturing such article.

In view of needs for a novel material which is environmentally friendly, flexible and easy to be produced, an object of the present invention is to provide a thermoplastic elastomer foaming material which is soft, recyclable and mass producible.

### SUMMARY OF THE INVENTION

The above object can be achieved in the present invention by a thermoplastic elastomer foaming material comprising (A) from about 16 to about 50 percents by weight a hydrogenated styrenic/conjugated diene series copolymer, (B) from about 7 to about 50 percents by weight an polyolefinic material and (C) from about 16 to about 45 percents by weight a plasticizer.

In the above thermoplastic elastomer foaming material, the hydrogenated styrenic/conjugated diene series copolymer has a molecular weight of from about 80,000 to about 500,000 grams per mole.

In the above thermoplastic elastomer foaming material, the polyolefinic material includes one selected from the group consisting of ethylene vinyl acetate copolymer, ethylene butyl acrylate, ethylene-α-olefin copolymer and a combination thereof.

In the above thermoplastic elastomer foaming material, the rubber includes one selected from the group consisting of ethylene-propylene-nonconjugated diene rubber, isoprene rubber, styrenic-butadiene rubber, acrylonitrile-butadiene rubber, butadiene rubber and a combination thereof.

In the above thermoplastic elastomer foaming material, the plasticizer includes a processing oil, wherein the processing oil is one selected from the group consisting of paraffinic oil, naphthenic oil, aromatic oil and a combination thereof. More preferably, the processing oil contains from about 0.01% to about 20% aromatics or is free of aromatics.

In the above thermoplastic elastomer foaming material, optionally further includes at least one conventional additive such as, foaming agents, crosslinking agents, foaming promoters, crosslinking promoters, dispersion promoters and fillers. More preferably comprises from about 1.0 to about 10 parts by weight azodicarbonamide as a foaming agent, from about 0.2 to about 5 parts by weight dicumyl peroxide as a crosslinking agent, from about 0.5 to about 6 parts by weight zinc oxide as a foaming promoter, from about 0.1 to about 1.5 parts by weight high molecular weight methacrylate as a crosslinking promoter, from about 0.2 to about 5 parts by weight aliphatic stearic acid as a dispersion promoter and from about 1 to about 120 parts by weight light calcium carbonate as a filler.

In the above thermoplastic elastomer foaming material, the conjugated diene includes one selected from the group consisting of 1,3-butadiene, isoprene, 1,3-pentadiene and a combination thereof, and available unsaturated double bonds of a polymeric unit of the conjugated diene are under 10%, preferably under 5%.

In the above thermoplastic elastomer foaming material, hardness of the thermoplastic elastomer foaming material is from about 3C to about 30C.

In the above thermoplastic elastomer foaming material, specific gravity of the thermoplastic elastomer foaming material is from about 0.1 to about 0.25.

In another aspect of the present invention, it relates to a method for processing a relatively soft and low specific gravity thermoplastic elastomer foaming material comprising steps of (A) mixing from about 16 to about 50 percents by weight a hydrogenated styrenic/conjugated diene series copolymer with from about 16 to about 45 percents by weight a plasticizer to form a mixture, (B) compounding the mixture with from about 7 to about 50 percents by weight an polyolefinic material and (C) performing a foam molding.

In the above method, the step (A) includes an adsorbing process and is performed at a temperature between about 50°C and about 70°C.

In the above method, the step (B) is performed in one of a banbury mixer and a twin-screw extruder and at about 110°C.

In the above method, the step (C) is an open mold foaming and performed at a temperature between about 160°C and about 180°C.

In the above method, hardness of the thermoplastic elastomer foaming material is from about 3C to about 30C.

In the above method, specific gravity of the thermoplastic elastomer foaming material is from about 0.1 to about 0.25.

In the above method, the hydrogenated styrenic/conjugated diene series copolymer has a molecular weight of from about 80,000 to about 500,000 grams per mole.

### DETAILED DESCRIPTION OF THE INVENTION

The present invention will now be described more specifically with reference to the following embodiments. It is to be noted that the following descriptions of preferred embodiments of this invention are presented herein for the aspect of illustration and description only; it is not intended to be exhaustive or to be limited to the precise form disclosed.

The present invention provides a hydrogenated styrenic/conjugated diene series copolymer matrix foaming material since the copolymer is easy to be processed and has high compatibility with not only other raw materials such as polyolefinic materials and plasticizers but most conventional additives, such as foaming agents, crosslinking agents, foaming promoters, crosslinking promoters, dispersion promoters and fillers.

The conjugated diene used in the present invention is one selected from the group consisting of 1,3-butadiene, isoprene, 1,3-pentadiene and a combination thereof, wherein the available unsaturated double bonds of a polymeric unit of the conjugated diene are under 10%, preferably under 5%. The conjugated diene used in the present invention is also obtained from commercial products on the market. As to hydrogenated styrenic/conjugated diene block copolymer, where 1,3 butadiene is used as conjugated diene, Kraton G Series of Kraton, Septon 6 and Septon 8 Series of Septon, SEBS series of TSRC, SEBS 2 Series of Polymeri, Calprene H Series of Dynasol and Tuftec H of Asahi are suitable.

As to hydrogenated styrenic/conjugated diene block or random copolymer, where 1,3-butadiene is used as conjugated diene, Dynaron Series and Dynaflex Series of JSR are suitable. As to hydrogenated styrenic/conjugated diene block copolymer, where isoprene is used as conjugated diene, styrene-ethylene-propylene-styrene thermoplastic elastomer of Septon 2 Series of Kuraray and Septon is suitable. And as to hydrogenated styrenic/conjugated diene block copolymer, where isoprene and 1,3-butadiene are used as conjugated diene, styrene-[ethylene(ethylene-propylene)]-styrene thermoplastic elastomer of Septon 4 Series of Kuraray and Septon is suitable.

Synthetic and commercial hydrogenated styrenic/conjugated diene copolymers used in the present invention have a molecular weight of from about 80,000 to about 500,000 grams per mole (measured by PS standardized GPC) without containing any processing oil.

The process of mixing a raw rubber/plastic material with different kinds of raw rubbers or with fillers, plasticizers, promoting agents, cross-linking agents, foaming agents to become a formulated rubber, which has desired physical properties and good dispersion with additives and makes the raw rubber plasticized, is called compounding. Compounding apparatus are usually divided into two types, continuous and batch. To make different kinds of products with small amounts of each one, rubbers are usually processed in batch mixers.

The main advantage of batch mixers is big operating window. Processing recipes such as compounding time, mixing order of raw materials and temperatures are easy to be set depending on different requirements so batch mixers are widely used in this industry. The foamed articles of the present invention are made by this kind of mixer. And compounded articles are usually pressed into a flat structure by a mill for performing a mold foaming.

In one embodiment of the present invention, hydrogenated styrenic/conjugated diene copolymers and plasticizers are mixed at a temperature between about 50°C and about 70°C and adsorbed over 24 hours until adsorption between the copolymers and the plasticizers is completed. After that, polyolefinic materials, rubbers and other additives are incorporated into the mixture of the copolymers and the plasticizers and then compounded. Pellets of the compounded material are made by a kneader, a banbury mixer or a twin-screw extruder. Various ratios of cross-linking agents and foaming agents may be added into the pellets to perform a foam molding in a press apparatus under an appropriate temperature and pressure.

The plasticizer used in the present invention can be a processing oil such as paraffinic oil, naphthenic oil and aromatic oil. Adding processing oils can lower the material cost and improve processing properties. However, the aromatice concentration(C_{A}%) of processing oils can not be too high, or the cross-linking efficiency will be reduced. The preferable C_{A}% is in the range of 0 to 20% so preferred processing oil of the present invention is paraffinic oil.

The polyolefinic materials which are useful in the present invention are homopolymers or copolymers of olefins such as ethylene vinyl acetate (EVA), ethylene-butylacrylate (EBA), ethylene-α-olefin copolymer (EOC) and a combination thereof.

Rubbers can be used in the present invention optionally. The rubbers include ethylene-propylene-nonconjugated diene rubber (EPDM), isoprene rubber (IR), styrene-butadiene rubber (SBR), acrylonitrile-butadiene rubber (NBR), butadiene rubber (BR) and a combination thereof.

A foam article can be made by adding foaming agents or using supercritical fluid technology. The foaming agents used in the present invention include physical or chemical foaming agents and a combination thereof. The physical foaming agents comprise fluorinated hydrocarbons, nitrogen, other gases excluding nitrogen, and aliphatic hydrocarbons such as propane, isobutane, pentane and hexane. And the chemical foaming agents comprise azodicarbonamide, nitroso, hydrazide, hydrazo, sodium bicarbonate and ammonium carbonate.

Preferably, the foaming material in accordance with the present invention comprises from about 1 to about 10 parts by weight azodicarbonamide (AC) as a foaming agent.

In one preferred embodiment of the present invention, physical properties of the foaming material are altered by adding cross-linking agents, cross-linking promoters, foaming promoters, dispersion promoters and fillers during processing.

In one preferred embodiment of the present invention, organic peroxides, such as dicumyl peroxide (DCP), are used from about 0.2 to about 5 parts by weight as a cross-linking agent. The ratio of AC to DCP is from about 0.2 to about 5/about 1 to about 10.

In one preferred embodiment of the present invention, metal oxides, such as zinc oxide (ZnO), are used from about 0.5 to about 6 parts by weight as a foaming promoter.

Further, aliphatic stearic acid (C₁₇H₃₅COOH) which is a white solid with a melting point between 59°C and 62°C is used as a dispersion promoter. The foaming material contains about 0.2 to about 5 parts by weight aliphatic stearic acid.

PL-400 available from Taisun Trade Co. Ltd., Taiwan is a high molecular weight methacrylate (C₁₈H₂₅O₅) which is used as a cross-linking promoter in a preferred embodiment of the present invention. The foaming material contains about 0.1 to about 1.5 parts by weight PL-400.

Light calcium carbonate optionally acts as a filler in one preferred embodiment of the present invention from about 1 to about 120 parts by weight.

To further illustrate the present invention, several preferred embodiments and comparative examples are described as below. The compositions of preferred embodiments are shown in Table 1 and Table 2.

### Comparative Example 1

In a kneader compounding apparatus, 30 parts by weight Engage-8480 available from DuPont and 70 parts by weight EVA containing 18% VA are compounded initially at 80°C. Additives, such as 2.3 parts by weight AC foaming agent, 0.85 parts by weight DCP crosslinking agent, 1.5 parts by weight activated zinc oxide foaming promoter, 0.4 parts by weight PL-400 crosslinking promoter and 0.5 parts by weight stearic acid dispersion promoter, are added into the compounded material when the temperature rises to 100°C. The compounding process is continued until the temperature rises to 110°C, and then the compounded material is removed from the kneader compounding apparatus into a mill compounding apparatus at 80°C. The compounded material is shaped into a thin structure by means of the mill compounding apparatus. It weights 260 grams measuring by an electron balance. Finally, the compounded material is put in a foaming apparatus with a die having a dimension of 140mm x 100mm x 12mm at 160°C. The foaming article of the compounded material is obtained by hot pressing it under 150kg/cm² for 18 minutes.

In the above foaming article, the hardness and the specific gravity are 57C and 0.26, respectively.

### Comparative Example 2

3 percents by weight SEBS copolymer of SEBS-3151 available from Taipol is mixed with 4 percents by weight paraffinic oil of PW-32 available from Idemitsu at 50°C until adsorbs completely in a mixer, and then compound with 90 percents by weight EVA containing VA 18% in a kneader compounding apparatus at 80°C. Additives, 1 part by weight AC foaming agent, 0.7 part by weight DCP crosslinking agent, 0.7 part by weight activated zinc oxide foaming promoter, 0.3 part by weight PL-400 crosslinking promoter and 0.3 part by weight stearic acid dispersion promoter, are added into the compounded material when the temperature rises to 100°C. The compounding process is continued until the temperature rose to 110°C, and then the compounded material is removed from the kneader compounding apparatus into a mill compounding apparatus at 80°C. The compounded material is shaped into a thin structure by means of the mill compounding apparatus. It weights 260 grams measuring by an electron balance. Finally, the compounded material is put in a foaming apparatus with a die having a dimension of 140mm x 100mm x 12mm at 160°C. The foaming article of the compounded material is obtained by hot pressing it under 150kg/cm² for 18 minutes.

In the above foaming article, the hardness and the specific gravity are 60C and 0.33, respectively.

### Preferred Embodiment 1

50 parts by weight SEBS thermoplastic elastomer of SEBS-3151 available from Taipol are mixed with 20 parts by weight paraffinic oil of PW-32 at 50°C until adsorbs completely in a mixer. After complete adsorption, 30 parts by weight EPDM, 30 parts by weight EVA, 0.5 parts by weight stearic acid dispersion promoter and 50 parts by weight light calcium carbonate filler are added, and then all of the above substances are compounded in a kneader compounding apparatus at 80°C. Additives, 6 parts by weight AC foaming agent, 1.2 parts by weight DCP crosslinking agent, 1 part by weight activated zinc oxide foaming promoter and 0.5 part by weight PL-400 crosslinking promoter, are added into the compounded material when the temperature rises to 100°C. The compounding process is continued until the temperature rose to 110°C, and then the compounded material is removed from the kneader compounding apparatus into a mill compounding apparatus at 80°C. The compounded material is shaped into a thin structure by means of the mill compounding apparatus. It weights 260 grams measuring by an electron balance. Finally, the compounded material is put in a foaming apparatus with a die having a dimension of 140mm x 100mm x 12mm at 160°C. The foaming article of the compounded material is obtained by hot pressing it under 150kg/cm² for 18 minutes.

As shown in Table 1, in Preferred Embodiments 2, 3 and 4, the rubbers are 30 parts by weight SBR, 30 parts by weight IR and 30 parts by weight NBR, and the processing oils are 40, 60, 100 parts by weight, respectively. Other processing conditions and compositions are the same with Preferred Embodiment 1 except the rubbers and processing oils.

**Table 1**

| Preferred Embodiment | 1 | 2 | 3 | 4 |
|---|---|---|---|---|
| Taipol-3151 (SEBS) | 50 | 50 | 50 | 50 |
| paraffinic oil (processing oil) | 20 | 40 | 60 | 100 |
| EPDM (rubber) | -- | -- | 30 | -- |
| SBR (rubber) | 30 | -- | -- | -- |
| IR (rubber) | -- | 30 | -- | -- |
| NBR (rubber) | -- | -- | -- | 30 |
| EVA (polyolefinic material) | 20 | 20 | 20 | 20 |
| CaCO₃ (Filler) | 50 | 50 | 50 | 50 |
| ZnO (foaming promoter) | 1 | 1 | 1 | 1 |
| SA (dispersion promoter) | 0.5 | 0.5 | 0.5 | 0.5 |
| PL-400 (crosslinking promoter) | 0.5 | 0.5 | 0.5 | 0.5 |
| DCP (crosslinking agent) | 1.2 | 1.2 | 1.2 | 1.2 |
| AC (foaming agent) | 6 | 6 | 6 | 6 |
| Hardness | 30C | 21C | 13C | 6C |
| Specific Gravity | 0.20 | 0.16 | 0.14 | 0.12 |

In Preferred Embodiment 1, the hardness and specific gravity of the SEBS block copolymer foaming material are 30C and 0.2, respectively. From Preferred Embodiments 1 to 4, it is known that the hardness and the specific gravity of the foaming material can be modified by adding different ratios of processing oils. And foaming articles obtained in Preferred Embodiments 1 to 4 are soft in touch with micro foaming structures.

From the above Preferred Embodiments, the hardness and the specific gravity of the SEBS block copolymer foaming materials obtained from the present invention are between 5C and 30C and 0.1 and 0.25, respectively.

### Preferred Embodiment 5

51 percents by weight styrene-[ethylene-(ethylene-propylene)]-styrene(SEEPS) Septon-4055 available from Kuraray is mixed with 17.2 percents by weight paraffinic oil of PW-32 available from Idemitsu at 50°C until adsorbed completely in a mixer. After complete adsorption, 17.2 percents by weight EVA containing 18% VA and 10 parts by weight light calcium carbonate filler are added, and then all of the above substances are compounded in a kneader compounding apparatus at 80°C. Additives, 3 parts by weight AC foaming agent, 1 part by weight DCP crosslinking agent, 1.2 parts by weight activated zinc oxide foaming promoter, 0.5 part by weight PL-400 crosslinking promoter and 0.5 part by weight stearic acid dispersion promoter, are added into the compounded material when the temperature rises to 100°C. The compounding process is continued until the temperature rises to 110°C, and then the compounded material is removed from the kneader compounding apparatus into a mill compounding apparatus at 80°C. The compounded material is shaped into a thin structure by means of the mill compounding apparatus. It weights 260 grams measuring by an electron balance. Finally, the compounded material is put in a foaming apparatus with a die having a dimension of 140mm x 100mm x 12mm at 160°C. The foaming article of the compounded material is obtained by hot pressing it under 150kg/cm² for 18 minutes.

In the above foaming article, the hardness and the specific gravity are 25C and 0.21, respectively.

### Preferred Embodiment 6

17.2 percents by weight styrene-ethylene-butylene-styrene(SEBS) copolymer of SEBS-3151 available from Taipol is mixed with 21.5 percents by weight paraffinic oil of PW-32 available from Idemitsu at 50°C until adsorbed completely in a mixer. After complete adsorption, 47.3 percents by weight EVA and 10 parts by weight light calcium carbonate filler are added, and then all of the above substances are compounded in a kneader compounding apparatus at 80°C. Additives, 3 parts by weight AC foaming agent, 1 part by weight DCP crosslinking agent, 1.2 parts by weight activated zinc oxide foaming promoter, 0.5 part by weight PL-400 crosslinking promoter and 0.5 part by weight stearic acid dispersion promoter, are added into the compounded material when the temperature rises to 100°C. The compounding process is continued until the temperature rose to 110°C, and then the compounded material is removed from the kneader compounding apparatus into a mill compounding apparatus at 80°C. The compounded material is shaped into a thin structure by means of the mill compounding apparatus. It weights 260 grams measuring by an electron balance. Finally, the compounded material is put in a foaming apparatus with a die having a dimension of 140mm x 100mm x 12mm at 160°C. The foaming article of the compounded material is obtained by hot pressing it under 150kg/cm² for 18 minutes.

In the above foaming article, the hardness and the specific gravity are 20C and 0.13, respectively.

### Preferred Embodiment 7

15.9 percents by weight styrene-[ethylene-(ethylene-propylene)]-styrene(SEEPS) Septon-4055 available from Kuraray is mixed with 19.8 percents by weight paraffinic oil of PW-32 at 50°C until adsorbed completely in a mixer. After complete adsorption, 43.7 percents by weight low density polyethylene(LDPE), 0.5 part by weight light stearic acid dispersion promoter, 1 part by weight antioxidant and 20 parts by weight light calcium carbonate filler are added, and then all of the above substances are compounded in a kneader compounding apparatus at 80°C. Additives, 2.5 parts by weight AC foaming agent, 1 part by weight DCP crosslinking agent, 1 part by weight activated zinc oxide foaming promoter, 0.5 part by weight PL-400 crosslinking promoter and 0.5 part by weight stearic acid dispersion promoter, are added into the compounded material when the temperature rises to 100°C. The compounding process is continued until the temperature rises to 110°C, and then the compounded material is removed from the kneader compounding apparatus into a mill compounding apparatus at 80°C. The compounded material is shaped into a thin structure by means of the mill compounding apparatus. It weights 260 grams measuring by an electron balance. Finally, the compounded material is put in a foaming apparatus with a die having a dimension of 140mm x 100mm x 12mm at 160°C. The foaming article of the compounded material is obtained by hot pressing it under 150kg/cm² for 18 minutes.

In the above foaming article, the hardness and the specific gravity are 28C and 0.11, respectively.

### Preferred Embodiment 8

19.9 percents by weight styrene-ethylene-butylene-styrene(SEBS) copolymer of SEBS-3151 available from Taipol is mixed with 15.9 percents by weight naphthenic oil of 222u available from Nynas at 50°C until adsorbs completely in a mixer. After complete adsorption, 43.8 percents by weight EVA and 20 parts by weight light calcium carbonate filler are added, and then compounded all above substances in a kneader compounding apparatus at 80°C. Additives, 2.5 parts by weight AC foaming agent, 1 part by weight DCP crosslinking agent, 1 part by weight activated zinc oxide foaming promoter, 0.5 part by weight PL-400 crosslinking promoter and 0.5 part by weight stearic acid dispersion promoter, are added into the compounded material when the temperature rises to 100°C. The compounding process is continued until the temperature rises to 110°C, and then the compounded material is removed from the kneader compounding apparatus into a mill compounding apparatus at 80°C. The compounded material is shaped into a thin structure by means of the mill compounding apparatus. It weights 260 grams measuring by an electron balance. Finally, the compounded material is put in a foaming apparatus with a die having a dimension of 140mm x 100mm x 12mm at 160°C. The foaming article of the compounded material is obtained by hot pressing it under 150kg/cm² for 18 minutes.

In the above foaming article, the hardness and the specific gravity are 24C and 0.13, respectively.

### Preferred Embodiment 9

21.6 percents by weight styrene-ethylene-butylene-styrene(SEBS) copolymer of SEBS-3151 available from Taipol is mixed with 43.2 percents by weight paraffinic oil of PW-32 at 50°C until adsorbs completely in a mixer. After complete adsorption, 21.6 percents by weight EVA and 10 parts by weight light calcium carbonate filler are added, and then all of the above substances are compounded in a kneader compounding apparatus at 80°C. Additives, 2.5 parts by weight AC foaming agent, 1 part by weight DCP crosslinking agent, 1 part by weight activated zinc oxide foaming promoter, 0.5 part by weight PL-400 crosslinking promoter and 0.5 part by weight stearic acid dispersion promoter, are added into the compounded material when the temperature rises to 100°C. The compounding process is continued until the temperature rises to 110°C, and then the compounded material is removed from the kneader compounding apparatus into a mill compounding apparatus at 80°C. The compounded material is shaped into a thin structure by means of the mill compounding apparatus. It weights 260 grams measuring by an electron balance. Finally, the compounded material is put in a foaming apparatus with a die having a dimension of 140mm x 100mm x 12mm at 160°C. The foaming article of the compounded material is obtained by hot pressing it under 150kg/cm² for 18 minutes.

In the above foaming article, the hardness and the specific gravity are 4C and 0.11, respectively.

**Table 2**

| Preferred Embodiment | 5 | 6 | 7 | 8 | 9 |
|---|---|---|---|---|---|
| Taipol-3151 (SEBS) | -- | 17.2% | -- | 19.9% | 21.6% |
| Septon-4055 (SEEPS) | 51% | -- | 15.9% | -- | -- |
| paraffinic oil (processing oil) | 17.2% | 21.5% | 19.8% | -- | 43.2% |
| naphthenic oil (processing oil) | -- | -- | -- | 15.9% | -- |
| EVA (polyolefinic material) | 17.2% | 47.3% | -- | 43.8% | 21.6% |
| LDPE (polyolefinic material) | -- | -- | 43.7% | -- | -- |
| CaCO₃ (Filler) | 10 | 10 | 20 | 20 | 10 |
| ZnO (foaming promoter) | 1.2 | 1.2 | 1 | 1 | 1 |
| SA (dispersion promoter) | 0.5 | 0.5 | 1 | 0.5 | 0.5 |
| PL-400 (crosslinking promoter) | 0.5 | 0.5 | 0.5 | 0.5 | 0.5 |
| DCP (crosslinking agent) | 1 | 1 | 1 | 1 | 1 |
| AC (foaming agent) | 3 | 3 | 2.5 | 2.5 | 2.5 |
| Hardness | 25C | 20C | 28C | 24C | 4C |
| Specific Gravity | 0.21 | 0.13 | 0.11 | 0.13 | 0.11 |

## Claims

1. A thermoplastic elastomer foaming material, **characterized in that** the thermoplastic elastomer foaming material comprises:
from about 16 to about 50 percents by weight a hydrogenated styrenic/conjugated diene series copolymer;
from about 7 to about 50 percents by weight an polyolefinic material; and
from about 16 to about 45 percents by weight a plasticizer.

2. The thermoplastic elastomer foaming material as claimed in claim 1, **characterized in that** the hydrogenated styrenic/conjugated diene series copolymer has a molecular weight of from about 80,000 to about 500,000 grams per mole.

3. The thermoplastic elastomer foaming material as claimed in claim 1,
**characterized in that** the polyolefinic material includes one selected from the group consisting of ethylene vinyl acetate copolymer, ethylene butyl acrylate, ethylene-£\olefin copolymer and a combination thereof.

4. The thermoplastic elastomer foaming material as claimed in claim 1, **characterized by** including a rubber, **characterized in that** the rubber includes one selected from the group consisting of ethylene-propylene-nonconjugated diene rubber, isoprene rubber, styrene-butadiene rubber, acrylonitrile-butadiene rubber, butadiene rubber and a combination thereof.

5. The thermoplastic elastomer foaming material as claimed in claim 1, **characterized in that** the plasticizer includes one processing oil.

6. The thermoplastic elastomer foaming material as claimed in claim 5, **characterized in that** the processing oil is one selected from the group consisting of paraffinic oil, naphthenic oil, aromatic oil and a combination thereof.

7. The thermoplastic elastomer foaming material as claimed in claim 5, **characterized in that** the processing oil contains from about 0.01% to about 20% aromatics.

8. The thermoplastic elastomer foaming material as claimed in claim 5, **characterized in that** the processing oil is free of aromatics.

9. The thermoplastic elastomer foaming material as claimed in claim 1, **characterized by** including at least one additive selected from the group consisting of foaming agents, crosslinking agents, foaming promoters, crosslinking promoters, dispersion promoters and fillers.

10. The thermoplastic elastomer foaming material as claimed in claim 9, **characterized by** comprising from about 1.0 to about 10 parts by weight azodicarbonamide as a foaming agent, from about 0.2 to about 5 parts by weight dicumyl peroxide as a crosslinking agent, from about 0.5 to about 6 parts by weight zinc oxide as a foaming promoter, from about 0.1 to about 1.5 parts by weight high molecular weight methacrylate as a crosslinking promoter, from about 0.2 to about 5 parts by weight aliphatic stearic acid as a dispersion promoter and from about 1 to about 120 parts by weight light calcium carbonate as a filler.

11. The thermoplastic elastomer foaming material as claimed in claim 1, **characterized in that** the conjugated diene includes one selected from the group consisting of 1,3-butadiene, isoprene, 1,3-pentadiene and a combination thereof, and available unsaturated double bonds of a polymeric unit of the conjugated diene are under 10%, preferably under 5%.

12. The thermoplastic elastomer foaming material as claimed in claim 1 to claim 11, **characterized in that** a hardness of the thermoplastic elastomer foaming material is from about 3C to about 30C.

13. The thermoplastic elastomer foaming material as claimed in claim 1 to claim 12, **characterized in that** a specific gravity of the thermoplastic elastomer foaming material is from about 0.1 to about 0.25 and the copolymer is crosslinked.

14. A method for processing a relatively soft and low specific gravity thermoplastic elastomer foaming material, **characterized in that** the method comprises steps of:
(a) mixing from about 16 to about 50 percents by weight a hydrogenated styrenic/conjugated diene series copolymer with from about 16 to about 45 percents by weight a plasticizer to form a mixture,
(b) compounding the mixture with from about 7 to about 50 percents by weight an polyolefinic material; and
(c) performing a foam molding.

15. The method as claimed in claim 14, **characterized in that** the step (a) includes an adsorbing process.

16. The method as claimed in claim 14, **characterized in that** a specific gravity and a hardness of the relatively soft and low specific gravity thermoplastic elastomer foaming material are from about 0.1 to about 0.25 and from about 3C to about 30C, respectively.

17. The method as claimed in claim 14, **characterized in that** the step (a) is performed at a temperature between about 50°C and about 70°C.

18. The method as claimed in claim 14, **characterized in that** the step (b) is performed in one of a banbury mixer and a twin-screw extruder.

19. The method as claimed in claim 14, **characterized in that** the step (b) is performed at about 110°C.

20. The method as claimed in claim 14, **characterized in that** the step (c) is an open mold foaming.

21. The method as claimed in claim 14, **characterized in that** the step (c) is performed at a temperature between about 160°C and about 180°C.

22. The method as claimed in claim 14, **characterized in that** the hydrogenated styrenic/conjugated diene series copolymer has a molecular weight of from about 80,000 to about 500,000 grams per mole.

23. The method as claimed in claim 14, **characterized in that** the polyolefinic material is one selected from the group consisting of ethylene vinyl acetate copolymer, ethylene butyl acrylate, ethylene-α-olefin copolymer and a combination thereof.

24. The method as claimed in claim 14, **characterized by** including a step of adding a rubber, **characterized in that** the rubber includes one selected from the group consisting of ethylene-propylene-nonconjugated diene rubber, isoprene rubber, styrene-butadiene rubber, acrylonitrile-butadiene rubber, butadiene rubber and a combination thereof.

25. The method as claimed in claim 14, **characterized in that** the plasticizer includes a processing oil.

26. The method as claimed in claim 24, **characterized in that** the processing oil is one selected from the group consisting of paraffinic oil, naphthenic oil, aromatic oil and a combination thereof.

27. The method as claimed in claim 24, **characterized in that** the processing oil contains from about 0.01% to about 20% aromatics.

28. The method as claimed in claim 24, **characterized in that** the processing oil is free of aromatics.

29. The method as claimed in claim 14, **characterized by** including a step of adding at least one additive selected from the group consisting of foaming agents, crosslinking agents, foaming promoters, crosslinking promoters, dispersion promoters and fillers.

30. The method as claimed in claim 28, **characterized by** comprising a step of adding from about 1.0 to about 10 parts by weight azodicarbonamide as a foaming agent, from about 0.2 to about 5 parts by weight dicumyl peroxide as a crosslinking agent, from about 0.5 to about 6 parts by weight zinc oxide as a foaming promoter, from about 0.1 to about 1.5 parts by weight high molecular weight methacrylate as a crosslinking promoter, from about 0.2 to about 5 parts by weight aliphatic stearic acid as a dispersion promoter and from about 1 to about 120 parts by weight light calcium carbonate as a filler.

31. The method as claimed in claim 14, **characterized in that** the conjugated diene includes one selected from the group consisting of 1,3-butadiene, isoprene, 1,3-pentadiene and a combination thereof, and available unsaturated double bonds of a polymeric unit of the conjugated diene are under 10%, preferably under 5%.
